# EUROPEAN PATENT SPECIFICATION

(11) **EP 2 511 511 B1**
(45) Date of publication and mention of the grant of the patent: **11.05.2016**
(21) Application number: 11162606.5
(22) Date of filing: 15.04.2011
(51) Int. Cl.: F02M 35/112, F02M 35/10, F02F 1/42

(54) **Charge air guide element and internal combustion engine with a charge air guide element**
Systemluftführungselement und Verbrennungsmotor mit einem Systemluftführungselement
Élément de guidage d'air de suralimentation et moteur à combustion interne doté de celui-ci

(43) Date of publication of application: 17.10.2012
(73) Proprietor: Caterpillar Motoren GmbH & Co. KG, 24159 Kiel (DE)
(72) Inventor: Schlemmer-Kelling, Udo, 24113 Molfsee (DE)
(74) Representative: Kramer Barske Schmidtchen Patentanwälte PartG mbB

(56) References cited:
- WO-A1-90/10145
- DE-A1- 4 018 620
- JP-A- 2 191 814
- JP-U- 62 135 844

## Description

### Technical Field

The present disclosure generally refers to a turbocharged engine system and more particularly to a configuration of a two-stage turbocharged system with exhaust gas recycling.

### Background

For medium speed internal combustion engines, two-stage turbocharged systems having a low-pressure stage turbocharger and high-pressure stage turbocharger may be used to pre-compress the charge air being provided to the combustion chambers. The turbocharged systems may be mounted to an engine block at the same or at opposing sides.

Internal combustion engines exhaust a complex mixture of air pollutants. These air pollutants are composed of gaseous compounds such as nitrogen oxides (NO_{X}), and solid particulate matter also known as soot. Due to increased environmental awareness, exhaust emission standards have become more stringent, and the amount of NO_{X} and soot emitted to the atmosphere by an engine may be regulated depending on the type of engine, size of engine, and/or class of engine.

In order to ensure compliance with the regulation of NO_{X}, a strategy called exhaust gas recycling (EGR) for mixing the exhaust gas into the charge air may be implemented. EGR may reduce NO_{X} emission. As an exemplary EGR system, the not yet published EP application 09002111 (filed by Caterpillar Motoren GmbH & Co. KG on 16 February 2009) discloses a turbocharged engine with EGR. In particular, the EP application discloses an engine having end sides being opposite in a lengthwise direction of a crankshaft. On each side, a single-stage turbocharger system, i.e. an exhaust turbocharger with a turbine and a compressor, is arranged. The turbines are fluidly connected to a common exhaust manifold of the engine, while the compressors are fluidly connected to a common intake manifold of the engine.

As another example, the not yet published EP application 09015247 (filed by Caterpillar Motoren GmbH & Co. KG on 9 December 2009) discloses a two-stage turbocharged engine with exhaust gas recycling using a specifically shaped mixing pipe configuration.

The large dimensions of medium speed internal combustion engines may result in large charge air systems and large exhaust gas systems of similar dimensions as the combustion engine. For example, charge air or exhaust gas pipes may extend along the sides of the internal combustion engines from one turbocharger to the other.

Medium speed internal combustion engines may moreover be adapted for the use with fuels such as diesel fuel, light fuel oil (LFO), heavy fuel oil (HFO), alternative fuels of first generation biofuels (e.g. palm oil, canola oil, oils based on animal fat) and second generation biofuels (e.g. oils made of non food corps, i.e. waste biomass) that produce an exhaust gas that is destructive, e.g. corrosive, to the components with which the exhaust gas gets in contact.

In addition to the conventional exhaust gas system, which is inherently subjected to any corrosiveness of the exhaust gas, an EGR system subjects also components of the charge air system to the corrosiveness of the exhaust gas by adding the corrosive exhaust gas to the charge air.

JP 02-191814 B1 and DE 40 18 620 A1 disclose internal combustion engines with intake air passages that are integrated into the cylinder block.

WO 90/10145 A1 discloses a multi-cylinder two-stroke engine with a plenum chamber that commonly supplies a cavity arrangement within a cylinder block with intake air.

The object of the invention is directed, at least in part, to improving or overcoming one or more aspects of prior systems.

This object is achieved by a charge air guide element of claim 1 and a method of claim 15. Further developments of the invention are given in the dependent claims.

According to the present disclosure, a charge air guide element for an internal combustion engine is defined according to the appended claims.

According to another aspect of the present disclosure, an internal combustion engine may comprise a one-piece cast engine block with a top side, a first end side, and a second end side, the second end side opposing the first end side; a two-stage turbocharged system comprising a low-pressure turbocharger with a low-pressure compressor and a high-pressure turbocharger with a high-pressure compressor mounted at the first end side and the second end side, respectively; a plurality of cylinder units mounted at the top side and reaching into the engine block; and a charge air system comprising a compressor connection being integrated in the one-piece cast engine block for connecting the low-pressure compressor and the high-pressure compressor of the two-stage turbocharged system, and an inlet manifold for distributing charge air to each of the plurality of cylinder units, wherein the inlet manifold comprises a plurality of charge air guide elements e.g. as described herein and each charge air guide element includes a mounting section and a charge air guide section.

According to another aspect of the present disclosure, a method for replacing a charge air guide element in an internal combustion engine may comprise disconnecting the charge air guide element of the plurality of charge air guide elements that form an inlet manifold; and replacing the charge air guide element by a new charge air guide element.

The charge air guide element may further be an integral cast part.

The mounting section may be configured as a water ring for guiding a coolant for cooling the cylinder unit in the mounted state.

A plurality of charge air guide elements may be configured to provide a fluid connection from an exit of the high-pressure compressor to each of the cylinder units.

According to another aspect of the present disclosure, a mixing pipe for a charge air system of an internal combustion engine may comprise a first opening for fluidly connecting the mixing pipe to a high-pressure component of the charge air system and a second opening for fluidly connecting the mixing pipe to a connecting port of an charge air inlet manifold, at least one sharp bend between the first opening and the second opening; and an exhaust gas inlet port that is positioned between the first opening and the at least one sharp bend and configured for providing a fluid connection to an exhaust gas system of the internal combustion engine.

According to another aspect of the present disclosure, an internal combustion engine may comprise an engine block with a top side, a first end side, and a second end side, the second end side opposing the first end side; a turbocharged system comprising a compressor mounted at the second end side; a cooler for cooling the compressed charge air; a plurality of cylinder units mounted at the top side and reaching into the engine block; a charge air system comprising an inlet manifold for distributing charge air to each of the plurality of cylinder units, and a mixing pipe e.g. as described herein; and an exhaust gas system, wherein the first opening of the mixing pipe is connected with the cooler, the second opening of the mixing pipe is connected with the inlet opening of the inlet manifold, the exhaust gas inlet port is connected with the exhaust gas system, e.g. the exhaust manifold.

According to another aspect of the present disclosure, an engine block for an internal combustion engine with a two-stage turbocharged system may comprise a top side, a first end side, and a second end side, the second end side opposing the first end side, and a compressor connection is formed within the engine block, the compressor connection having a low-pressure side opening at the first end side for having charge air entered and a high-pressure side opening at the second end side for having charge air discharged.

According to another aspect of the present disclosure, an internal combustion engine may comprise an engine block as described herein having a top side, a first end side, and a second end side, the second end side opposing the first end side; a two-stage turbocharged system comprising a low-pressure turbocharger with a low-pressure compressor and a high-pressure turbocharger with a high-pressure compressor mounted at the first end side and the second end side of the engine block, respectively; a plurality of cylinder units mounted at the top side and reaching into the engine block; and a charge air system comprising a compressor connection being integrated in the one-piece cast engine block for connecting the low-pressure compressor and the high-pressure compressor of the two-stage turbocharged system, and an inlet manifold for distributing charge air to each of the plurality of cylinder units, wherein the inlet manifold comprises a plurality of charge air guide elements as e.g. described above and each charge air guide element includes a mounting section and a charge air guide section.

According to another aspect of the present disclosure, a method for manufacturing an engine block for an internal combustion engine may comprise casting of the engine block to comprise a top side, a first end side, and a second end side, the second end side opposing the first end side, wherein during the casting, a compressor connection is formed within the engine block, the compressor connection having a low-pressure side opening at the first end side for having charge air entered and a high-pressure side opening at the second end side for having charge air discharged.

In some embodiments, the engine block may be a one-piece cast and the compressor connection may be formed within the one-piece cast. There may be no fluid connection through the top side to the compressor connection.

In some embodiments, the compressor connection may comprise an air tight side wall connecting low-pressure side opening and high-pressure side opening. The air tight side wall may comprise only a single charge air inlet opening and a single charge air outlet opening. The air tight side wall may additionally comprise an opening configured for mounting a drain valve, e.g. at the bottom side of the compressor connection next to the high-pressure side opening.

The following advantages may apply to turbocharged internal combustion engines as disclosed herein.

An inlet manifold external to the engine block may provide better access and may be easier to mount, operate, and replace than an internal inlet manifold being integrated within the engine block. In addition, an internal low-pressure compressor connection arranged within the engine block may not be prone to service.

For example, corrosion caused by exhaust gas supplemented to the charge air may cause damage components of the charge air system such as the air guide elements of the inlet manifold or the mixing pipe. An exchange of a damaged component located at the outside may be easily serviced and may not affect the engine block, as, e.g., air guide elements and mixing pipes may be formed as separate cast parts that then may be replaced if damaged.

Other features and aspects of this disclosure will be apparent from the following description and the accompanying drawings.

### Brief Description of the Drawings

Fig. 1 is a schematic perspective view of an internal combustion engine with a two-stage turbocharged system;
Fig. 2 is a schematic cut view of the internal combustion engine of Fig. 1;
Fig. 3 is a schematic perspective view of a charge air guide element of the internal combustion engine of Fig. 1;
Fig. 4 is a schematic perspective view of a engine block of the internal combustion engine of Fig. 1;
Fig. 5 is a schematic illustration of the flow of the charge air within the internal combustion engine of Fig. 1;
Fig. 6 is a schematic perspective view of an internal combustion engine with a two-stage turbocharged system in V configuration;
Fig. 7 is a schematic perspective view of charge air guide elements of the internal combustion engine of Fig. 6; and
Fig. 8 is a schematic perspective view of a mixing pipe.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that EGR may result in damages to the charge air system, which results in the potential requirement to ease replacement of damaged components of the charge air system. As a result, new configurations for medium speed internal combustion engines are disclosed that may improve accessibility of those components being affected by ECR and, in particular, allow the implementation of those affected components as replacement parts.

For large air systems of two-stage turbocharged systems with turbochargers positioned at opposing ends of the engine block, the present disclosure discloses as an example a medium speed internal combustion engine having a low-pressure charge air connection between the opposed turbochargers integrated in a casted engine frame (hereinafter referred to as engine block) and providing an high-pressure charge air connection from the second stage turbocharger to the cylinders at the outside, e.g., on tope of the casted engine block by composing a charge air inlet manifold from modularized casted engine parts.

Moreover, the present disclosure discloses an engine block, e.g., a one-piece casted engine block, for internal combustion engines.

In addition, the present disclosure discloses a mixing pipe for connecting a turbocharged system with an inlet manifold for implementing EGR in a compact manner.

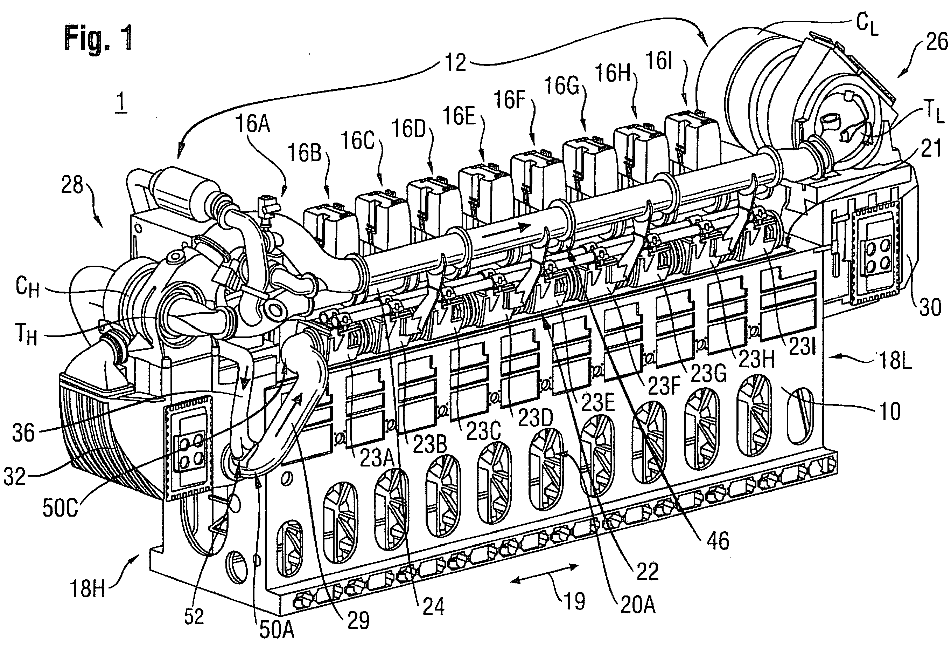

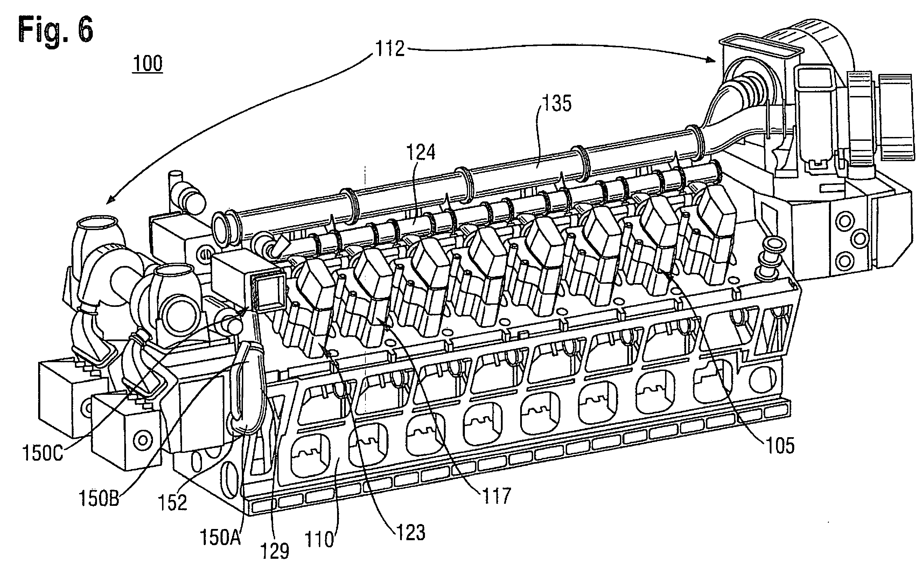

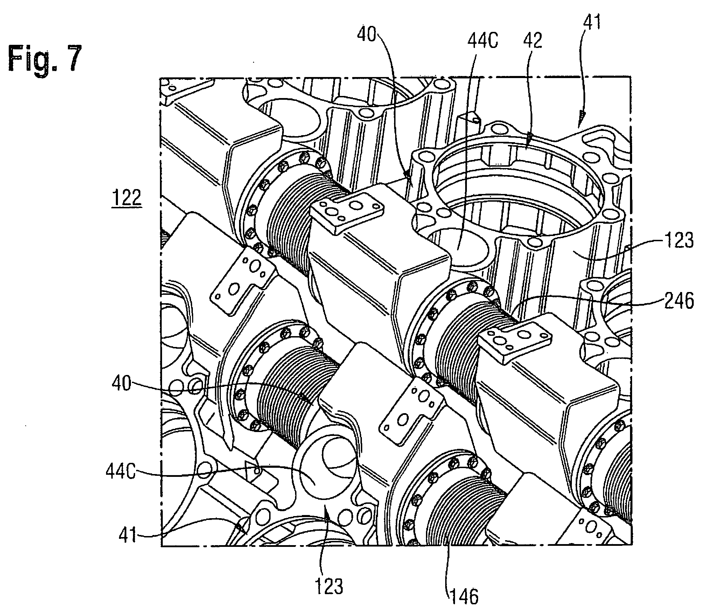

Figs. 1 to 5 refer to an in-line configuration of an internal combustion engine. However, the new concepts may be applied similarly to different engine configurations such as a V-configuration as illustrated in Figs. 6 and 7.

Referring to Figs. 1 to 5, an internal combustion engine 1 may comprise several cylinder units 16A-16I arranged in-line. As an example, Fig. 1 shows nine cylinder units. Internal combustion engine 1 may comprise an engine block 10 housing the crankshaft and providing support for cylinder units 16A-16I being mounted thereon and reaching through cylinder openings 11A-11I at a top side 21 of engine block 10 into the inside of engine block 10.

Internal combustion engine 1 may further comprise a two-stage turbocharged system 12 having a low-pressure stage turbocharger 26 and a high-pressure stage turbocharger 28. Internal combustion engine 1 may further comprise a fuel tank, one ore more catalyst systems, and an engine control unit, which are not shown.

Cylinder units 16A-16I may each comprise a cylinder head part 17, a combustion chamber, and a cylinder associated for guiding a piston within a cylinder liner. The piston may be connected to a crankshaft. A cover 48 may cover and protect the top of cylinder head part 17 as well as mechanical parts and fluid connection parts being arranged thereon. Internal components of cylinder units 16A-16I are not shown in detail.

In addition to top side 21, engine block 10 may have end sides 18L and 18H, being opposite in a lengthwise direction 19 defined by the longitudinal arrangement of cylinder units 16A-16I. Engine block 10 may further have opposing long sides 20A, 20B being opposite in a direction orthogonal to lengthwise direction 19. Cylinder units 16A-16I may linearly be arranged between end sides 18L und 18H and parallel to long sides 20A, 20B.

Internal combustion engine 1 may comprise a charge air system, which includes, e.g., an intake manifold 22, and an exhaust gas system, which includes, e.g., an exhaust manifold 24. For EGR, a fluid connection 36 between the exhaust gas system and the charge air system may be provided such that in a controlled manner exhaust gas can be mixed with the charge air before charging the combustion chamber. In Fig. 1, fluid connection 36 may leak into a mixing pipe 29 that may be provided before the charge air enters intake manifold 22.

Intake manifold 22 may extend on top of top side 21 in lengthwise direction 19 and may be fluidly connected to each of cylinder units 16A-16I. Accordingly, top side 21 may be configured for mounting a charge air inlet manifold thereon. Top side 21 may be free of any charge air openings that would provide a fluid connection from a fluid charge air passage within the engine block to intake manifold. Accordingly, there may be no opening through top side 21 for guiding charge air there through. In other words, the top side is configured to fluidly separate the inside of the engine block, in particular the charge air passage within the engine block from the top side.

Intake manifold 22 may be connected to high-pressure turbocharger 28 via mixing pipe 29 and to inlet openings of cylinder units 16A-16I. Each of cylinder units 16A-16I may be provided with at least one inlet valve (not shown) configured to open or close the fluid connection between intake manifold 22 and the combustion chamber of the respective cylinder unit.

Intake manifold 22 may not be casted into engine block 10 and may instead be mounted as one or more separately configured parts on top of top side 21. For example, top side 21 may be configured for having mounted the one or more separately configured parts thereon. Separately configured parts may have the advantage that replacement of each part can be performed without affecting the engine block.

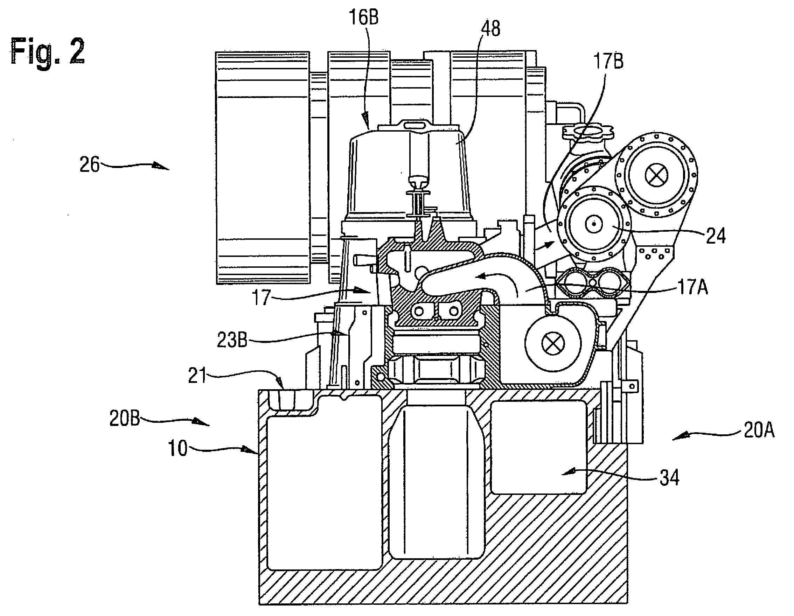

In Fig. 2, exhaust manifold 24 may be provided above intake manifold 22. Exhaust manifold 24 may be fluidly connected to each of cylinder units 16A-16I. Each of cylinder units 16A-16I may include an exhaust valve (not shown) configured to open and close the fluid connection between the combustion chamber of a respective cylinder unit 16A-16I and exhaust manifold 24.

Generally, when internal combustion engine 1 is operated, combustion chambers may be charged with charge air provided via intake manifold 22. After combustion, exhaust gas generated by the combustion process may be released from cylinder units 16A-16I via exhaust manifold 24.

Two-stage turbocharged system 12 may comprise low-pressure stage turbocharger 26 and high-pressure stage turbocharger 28, turbochargers 26, 28 forming a sequential turbocharging system. Generally, turbochargers may be applied to use the heat and pressure of the exhaust gas of an engine to drive a compressor for compressing the charge air for the engine.

In Fig. 1, low-pressure stage turbocharger 26 may comprise a compressor C_{L} and a turbine T_{L} that are mechanically connected via a common shaft. Similarly, high-pressure stage turbocharger 28 may comprise a compressor C_{H} and a turbine TH that are connected via a common shaft.

At end side 18L (also referred to as low-pressure side), low-pressure stage turbocharger 26 may be fixedly attached to engine block 10, e.g. directly or as a unit in combination with other components such as a charge air coolant block, e.g. a first cooler 30 etc.

At end side 18H (also referred to as high-pressure side), high-pressure stage turbocharger 28 may be fixedly attached to engine block 10, e.g. directly or as a unit in combination with other components such as a charge air coolant block, e.g. a second cooler 32 etc.

By mounting the turbochargers 26, 28 at opposite sides of engine block 10, mounting may be simplified and space may be used effectively, while providing easy access to the engine's components from long sides 20A, 20B.

An inlet of compressor C_{L} may be configured to suck in charge air for the combustion process. Generally, an outlet of compressor C_{L} may be fluidly connected via a compressor connection 34 with an inlet of compressor C_{H}.

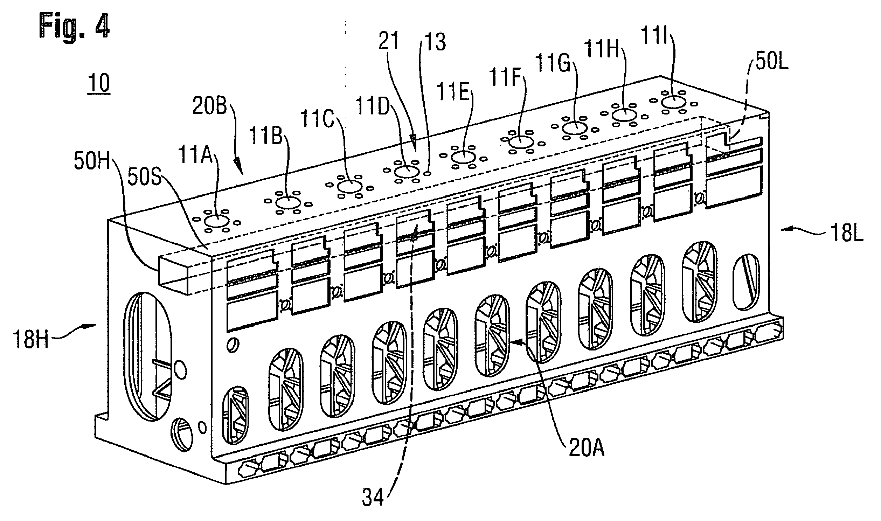

Compressor connection 34 may be a fluid connection provided within engine block 10 and that provides a passage from end side 18L to end side 18H within the one-piece casted engine block 10 but is otherwise closed air tight (see Fig. 4). The passage may include an opening 51L at end side 18L and an opening 51 H at end side 18H. The pressure within compressor connection 34 may be, e.g., 3 bar.

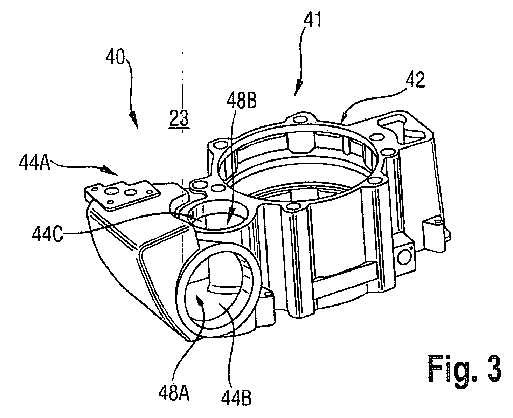

The outlet of compressor C_{L} may be connected via first cooler 30 to opening 51L and opening 51H may be connected to an inlet of compressor C_{H}. An outlet of compressor C_{H} may be connected via a second cooler 32 and mixing pipe 29 with intake manifold 22. Intake manifold 22 may be comprised of charge air guide elements 23A-23I and configured to distribute the charge air to cylinder units 16A-16I. An exemplary embodiment for charge air guide elements 23A-23I is described below in connection with Fig. 3.

Low-pressure stage turbocharger 26 and first cooler 30 may form a first unit that may be mounted to end side 18L of engine block 10. High-pressure stage turbocharger 28 and second cooler 32 may form a second unit that may be mounted to end side 18H of engine block 10.

In the mounted state, one may access the engine components, e.g. cylinder units 16A-16I and manifolds 22, 24, from long sides 20A, 20B and top side 21 while the side faces of engine block 10 at end sides 18L and 18H may be specifically configured and shaped for mounting the large components of two-stage turbocharged system 12, e.g. cooler/turbocharger units including turbochargers 26, 28 and first and second coolers 30, 32.

During operation of engine 1, the charge air may be twice compressed and cooled before charging of the combustion chambers of cylinder units 16A-16I. Within the combustion chambers, further compression of the charge air may be caused through the movement of the pistons. Then, an appropriate amount of fuel, e.g. diesel oil, marine diesel oil, heavy fuel oil, alternative fuels, or a mixture thereof, may be injected into the combustion chambers. Then, the fuel may be combusted with the compressed charged air and produce exhaust gas, which may be discharged via exhaust manifold 24.

An outlet of exhaust manifold 24 may be connected to an inlet of turbine TH_{.} An outlet of turbine T_{H} may be fluidly connected with an inlet of turbine T_{L} via a turbine pipe connection 35 and an outlet of turbine TL may release the exhaust gas. The exhaust gas system may additionally comprise one or more catalyst systems and/or one or more exhaust gas filtering systems that may be arranged, e.g., externally or within turbine pipe connection 35.

For medium speed large internal combustion engines, compressor C_{L} may compress the charge air to 3-5 bar at 180°C. Cooler 30 may cool the charge air from about 180°C to 45°C. Compressor C_{H} may compress the charge air to 7-8 bar at 180°C and cooler 32 may cool the charge air from about 180°C to 45°C. After combustion, the exhaust gas may have a pressure of about 5 to 6 bar at a temperature in the range of about 450°C to 500°C. Within turbine pipe connection 35, the pressure droops to 3-4 bar at a temperature in the range of about 350°C to 400°C. After turbine T_{L,} the temperature at ambient pressure may be in the range of or below 250°C.

The above described operation of internal combustion engine 1 may provide power to turn the crankshaft, e.g., to drive a generator.

Referring to piston diameter, number of pistons and piston stroke, the dimensions of the engine block 10 may be as follows: a length of the engine block 10 may be in the range of 1.5 to 2.5 times the piston diameter and times the number of pistons; a width of the engine block 10 may be in the range of 3 to 5 times the piston diameter; and a height of the engine block 10 may be in the range of 4 to 5 times the piston stroke.

Within engine block 10, compressor connection 34 may extend along long sides 20A, 20B. Thus, in the case of a medium speed large internal combustion engine, compressor connection 34 may have a length of several meters, e.g. 5 m. Compressor connection 34 may be, e.g., a rectangular shaped, pipe-like conduit having inner dimensions of several tenth of a meter. Generally, compressor connection 34 may have an inner dimension of about 0.2 to 1 m, e.g. 0.5 m.

Within the charge air system, there may be an inlet for adding an additive (e.g. water) to the pre-compressed charge air.

Referring to Fig. 1, intake manifold 22 may be provided externally to engine block 10 and may be made of a sequence of charge air guide elements 23A-23I for guiding charge air from high-pressure stage turbocharger 28 to cylinder units 16A-16I. Charge air guide elements 23a-23I may be formed as a cast part that is mounted on top of engine block 10 with, e.g., six screws.

As shown in Fig. 3, an exemplary charge air guide element 23 may be configured to have a charge air section 40 and a mounting section 41. Within charge air section 40, air guide element 23 may comprise an air channel system having an inlet opening 44A on a first side of the charge air guide element, a first outlet opening 44B at a second side being opposite to the first side, thereby providing a fluid connection (first passage 48A) from the first side to the second side (specifically, to first outlet opening 44B) in lengthwise direction 19 when mounted on top side 21.

As shown in Fig. 1, neighbouring charge air guide elements 23A-23I may be connected via bellows 46, thereby linearly extending the fluid connections of the sequence of charge air guide elements 23A-23I.

Each charge air guide element 23 may further comprise a second outlet opening 44C that is fluidly connected to first passage 48A from the first side to the second side, thereby providing a fluid connection (second passage 48B) from the first side to the second outlet 44C. Second outlet opening 44C may be configured for providing a charge air connection to a charge air inlet of the respective cylinder unit.

Mounting section 41 of the cast part may provide screw holes for mounting charge air guide element 23, for example, together with the respective cylinder unit onto top side 21 of engine block 10.

Mounting section 41 may further be configured as a water ring part 42 of the respective cylinder unit for cooling the cylinder unit. For example, water ring part 42 may be configured for guiding coolant (e.g. cooling water) for cooling the cylinder during operation. Specifically, water ring part 42 may surround the respective cylinder unit and provide a water path around the cylinder liner. For that purpose, water ring part 42 comprises a through hole for having a cylinder liner passed there through from cylinder head part 17 into engine block 10, wherein in the mounted state, a gap may exist between water ring part 42 and the cylinder liner.

Mounting section 41 is moreover the basis for mounting cylinder head part 17 thereon. Cylinder head part 17 may comprise a first tube-like extension 17A and a second tube-like extension 17B. First tube-like extension 17A may form the charge air inlet of the cylinder unit and connect to second outlet opening 44C of the respective charge air guide element 23. Second tube-like extension 17B may form the exhaust gas outlet of cylinder head part 17 and connect to exhaust manifold 24.

As shown in the schematic perspective view of engine block 10 in Fig. 4, engine block 10 may be casted to provide an integrated low-pressure compressor connection 34 for connecting compressors C_{L} and compressor C_{H}.

Specifically, compressor connection 34 may extend from low-pressure side 18L to high-pressure side 18H. Compressor connection 34 may be integrated in casted engine block 10, which is configured as a one piece cast, e.g. as a compact nodular cast iron component. Compressor connection 34 may comprise opening 51 L at low-pressure side 18L and opening 51 H at high-pressure side 18H, i.e. at the end faces of engine block 10. Compressor connection 34 may be adapted for pressures of charge air guided there through in the range of 3-5 bar. Compressor connection 34 may be fluid tight with the exception of these openings.

As shown in Fig. 4, compressor connection 34 may not include charge air outlets at top side 21 of engine block 10, as compressor connection 34 may not function as a charge air manifold that distributes charge air to the various cylinder units. Instead, compressor connection 34 may provide a direct fluid connection of turbochargers 26, 28 of the two-stage turbocharged system 12 and charge air manifold 22 may be arranged downstream of high-pressure stage turbocharger 28. Thus, there may be no fluid connection through top side 21 to compressor connection 34.

Top side 21 includes primarily piston openings 11A-11I for cylinder units 16A-16I. For example, a cylinder liner may reach from a respective cylinder head part 17 through a respective mounting section 42 of respective charge air guide element 23 and further through the top side 21 into engine block 10. In Fig. 4, six screw holes 13 for mounting the charge air guide elements are exemplarily indicated for each piston opening 11A-11I on top side 21 of engine block 10.

Top side 21 may not include openings for having charge air being guided there through.

It is noted that piston openings 11A-11I and compressor connection 34 may be arranged with respect to the cross-section of engine block such that the pistons may pass by compressor connection 34 and accordingly not interfere space-wise.

As shown in Fig. 4, compressor connection 34 may be a duct system integrated into casted engine block 10, which may be configured to withstand a charge air pressure of at least 3, 4, or 5 bar.

Compressor connection 34 may comprise an air tight side wall 50S connecting the low-pressure side opening 51 L and the high-pressure side opening 51 H. Air tight side wall 50S may comprises an opening configured for mounting a drain valve, e.g. at the bottom side of compressor connection 34 next to high-pressure side opening 51H.

Thus, air tight side wall 50S may comprise only a single charge air inlet opening and a single charge air outlet opening and air tight side wall 50S does not comprise a charge air outlet opening for each of the cylinder units, in particular not for each of the cylinder units.

Top side 21 of engine block 10 may comprise at least one series of piston openings 11A-11I linearly arranged in the direction from first end side 18L to second end side 18H.

To manufacture engine block 10 for an internal combustion engine 1, one may cast engine block 10, e.g. grey cast with using sand as a mold material. During casting, compressor connection 34 may be formed within engine block 10 to have low-pressure side opening 51 L at first end side 18L for having charge air entered and high-pressure side opening 51H at second end side 18H for having charge air discharged.

During casting, air tight side wall 50S may be formed to connect low-pressure side opening 51L and high-pressure side opening 51H.

As can be seen in Fig. 1, external pipe work for, e.g., high-pressure components such as mixing pipe 29, intake manifold 22, and/or exhaust manifold 24 may be mounted external to engine block 10, which may have the advantage to allow easy replacement of those high-pressure components.

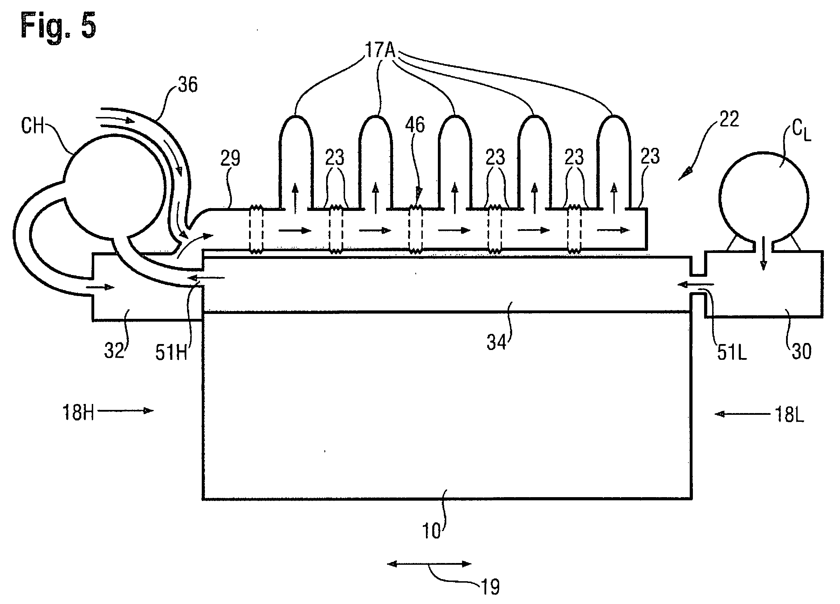

Fig. 5 shows a schematic flow diagram of an exemplary charge air system. From compressor C_{L}, which may suck in charge air from the outside, charge air may pass cooler 30 and compressor connection 34 before being further compressed by compressor C_{H}. From compressor C_{H}, charge air may pass cooler 32 and mixing pipe 29 before being distributed by intake manifold 22 to the cylinder units. Intake manifold 22 may be composed of charge air guide elements 23. Specifically, charge air guide elements 23 may be connected to respective charge air inlets 17A of cylinder head parts of cylinder units 16A-16I.

Mixing pipe 29 may be fluidly connected via a valve (not shown) with fluid connection 36 for connecting the charge air system with the exhaust gas system. Thereby, exhaust gas may be mixed with charge air in a controlled manner before being distributed to the combustion chambers via inlet manifold 22.

The above new disclosed configuration of a two-stage turbocharged system may be applied in a similar manner to internal combustion engines in V-configuration. Fig. 6 shows exemplarily an internal combustion engine 100 with two cylinder banks 105. While one of the cylinder banks can be seen in Fig. 6, the cylinder bank, which may be mirrored with respect to a vertical central plane of an engine block 110 is hidden by tubes of the exhaust system.

The general configuration and operation of internal combustion engine 100 is besides the V-configuration similar to the above described configuration of internal combustion engine 10 having a linear configuration.

The embodiment shown in Fig. 6 may further include for each of cylinder banks 105 a two-staged turbocharged system 120 as discussed above in connection with Fig. 1 for a linear configuration.

The top side in case of a V-configuration may include several sections, e.g. two cylinder sections through which openings for the cylinder units extend and a middle section connecting the cylinder sections (in contrast to the linear configuration, which may usually comprise only one section through which openings for the cylinder units extend.

One or two compressor connections (not shown) may be integrated within engine block 110 between cylinder banks 105. The compressor connection may be casted within engine block 110 to guide charge air from the low-pressure compressor/cooler unit to the high-pressure compressor/cooler unit.

Each of cylinder banks 105 may further be provided with a charge air manifold 122 and an exhaust gas manifold 124. From the high-pressure compressor/cooler unit, the charge air may be guided to charge air manifolds 122. Similar to the linear configuration discussed in Fig. 1, a sequence of charge air guide elements 123 may guide the charge air to respective charge air inlets of cylinder heads 117.

A common turbine pipe connection 135 (or two separated turbine pipe connections) may connect the four turbines of the two two-stage turbocharged systems 112.

As shown in Fig. 7, bellows 146 may connect neighbouring charge air inlet openings and charge air outlet openings of neighbouring charge air guide element 123.

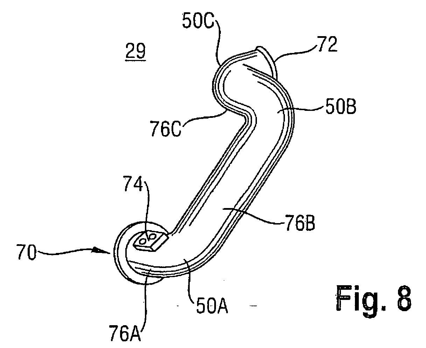

A further aspect of the new configuration relates to the mixing pipe for EGR. The mixing pipe described below in connection with Fig. 8 may in particular be used in combination with the herein disclosed two-stage turbocharged engines but may also be used for mixing charge air and exhaust gas in different types of medium speed internal combustion engines.

Both of the linear configurations shown in Fig. 1 and the V-configuration shown in Fig. 6 may be used together with a specifically shaped mixing pipe that allows EGR in a simple manner within the charge air system, specifically after the high-pressure compressor and the inlet manifold.

Fig. 8 shows exemplarily mixing pipe 29 of Fig. 1. Mixing pipe 29 may have a specific design that may allow implementing EGR despite the rather short available stream length for achieving an acceptable rate of mixing of the exhaust gas and the charge air. The mixing may, for example, be acceptable if it provides essentially similar mixing conditions for all cylinder units.

Referring to the piston diameter, mixing pipe 29 may have a diameter of 40%-80% of the piston diameter and a length of about 2 to 6 times the piston diameter. Thus, for 0.2 m to 0.6 m pistons, the length may be in the range from about 0.4 m to 3.6 m, e.g. at least about 0.5 m, 1 m, 1.5 m, or 2 m.

Referring to Fig. 8 and Fig. 1, mixing pipe 29 may have a first opening 70 for fluidly connecting mixing pipe 29 to a high-pressure component, e.g. cooler 32 of the two-stage turbocharged system 12, a second opening 72 for fluidly connecting mixing pipe 29 to a connecting port of inlet manifold 22, and an exhaust gas inlet port 74 for supplying exhaust gas into the mixing pipe. Exhaust gas inlet port 74 may be configured for providing a fluid connection to the exhaust gas system of the internal combustion engine.

Mixing pipe 29 may be configured to have at least one sharp bend between the first opening 70 and the second opening 72. The sharp bend may be configured to cause, during operation of the internal combustion engine 1, a turbulent stream within mixing pipe 29 to perform a mixing of exhaust gas and charge air. For example, the at least one sharp bend may be a bend of at least 70°, 75°, 80°, 85°, 90°, 95°, 100°, or 110°.

As shown in Fig. 8, mixing pipe 29 may be designed to have a first section 76A having a length in the range of 10 % of the length of mixing pipe 29. First section 76A may include exhaust gas inlet port 74. Mixing pipe 29 may be designed further to have a first sharp bend 50A of about 90°, a second section 76B, e.g., having a length in the range of 70 % of the length of mixing pipe 29, a second bend 50B of at least 70°, a third section 70C having a length in the range of 20% of the length of mixing pipe 29, a third bend 50C of at least 70°. The bending angles are measured from the deviation of the bent section from a linear direction (i.e. a linear pipe had a bending angle of 0°).

The lengths of the various sections may vary for the various engine types and sizes.

Exhaust gas inlet port 74 may be positioned close to the first opening 70 upstream of the first sharp bend 50A. For example, exhaust gas inlet port 74 may be arranged downstream of the first opening 50A at a distance of not more than 0.1, 0.2, 0.3, 0.4 or 0.5 m.

In the configurations of Figs. 1 and 6, a flange defining the first opening 70 may be arranged to be orthogonal to a flange defining the second opening 72. Also the orientation may vary for the various engine types and sizes.

In summary, to achieve the mixing of charge air and exhaust despite the limited length of mixing pipe 29, mixing pipe 29 may have at least one sharp bend 50A-50C that may enforce a turbulent stream within mixing pipe 29. In addition, to provide a mixing path of maximal length under the restricted conditions, exhaust gas inlet port 74 and the first sharp bend downstream of exhaust gas inlet port 74 may be located close to first opening 70. As shown in Figs. 1 and 8, exhaust gas may be supplied to the mixing pipe close to the connection of mixing pipe 29 and cooler 32, e.g., via two separate openings.

In the embodiment shown in Fig. 6, for each of cylinder banks 105, three sharp bends 150A, 150B, 150C may be provided. In flow direction of charge air, first sharp bend 150A may be positioned directly after an inlet opening 152 of a mixing pipe 129. At least one of sharp bends 150A, 150B, 150C may be a bend of at least 70°, 75°, 80°, 85°, 90°, 95°, 100°, or 110°.

During operation, mixing pipes 29, 129 may become damaged due to corrosive effects caused by the added exhaust in the high pressure environment. As mixing pipes may be accessible from the long sides, a replacement of the damaged mixing pipe may easily be performed when servicing the engine.

### Industrial Applicability

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Examples of internal combustion engines for the herein disclosed configuration of a two-stage turbocharged system include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

Medium speed internal combustion engines may be large stand-alone engines that therefore provide reasonable access to the end sides of the engine block.

Herein a fluid connection generally may correspond to a component providing a fluid connection, e.g., via an internal pathway having at least two openings connected by a side wall, such as e.g. a pipe. Components providing fluid pathways of the charge air system and the exhaust gas system may be connected with each other, for example, by flange connections as indicated in some of the figures.

Although the preferred embodiments of this invention have been described herein, improvements and modifications may be incorporated without departing from the scope of the following claims.

## Claims

1. A charge air guide element (23) for a cylinder unit (16A-16I) of an internal combustion engine (1, 100), **characterised in that** the charge air guide element (23) comprises:
a mounting section (41) comprising a through hole (42) configured as a passage for a cylinder liner of the cylinder unit (16A-16I) of the internal combustion engine (1, 100) in a mounted state of the charge air guide element, the mounting section (41) being configured to be mountable onto an engine block (10) of the internal combustion engine (1, 100) and being the basis for mounting a cylinder head (17); and
a charge air guide section (40) defining
a first passage (48A) extending from an inlet opening (44A) on a first side of the charge air guide section (40) to a first outlet opening (44B) at a second side of the charge air guide section (40), and
a second passage (48B) fluidly connecting a second outlet opening (44C) with the first passage and the second outlet opening (44C) is configured for providing a fluid connection from the inlet opening (44A) to a charge air inlet of the cylinder unit (16A-16I) in the mounted state,
the charge air guide section (40) being configured to be connectable with a charge air guide section of a charge air guide element associated with a neighbouring cylinder unit.

2. The charge air guide element (23) of claim 1, wherein the charge air guide element (23) is an integral cast part.

3. The charge air guide element (23) of claim 1 or 2, wherein a direction of the first passage (48A) from the first side to the second side is essentially oriented orthogonally to the direction of the through hole (42) of the mounting section (41).

4. The charge air guide element (23) of any one of claims 1-3, wherein the mounting section (41) is configured as a water ring for guiding a coolant for cooling the cylinder unit (16A-16I) in the mounted state.

5. An internal combustion engine (1, 100) comprising:
a one-piece cast engine block (10, 110) with a top side (21), a first end side (18L), and a second end side (18H), the second end side (18H) opposing the first end side (18H);
a two-stage turbocharged system (12, 112) comprising a low-pressure turbocharger (26) with a low-pressure compressor (C_{L}) and a high-pressure turbocharger (28) with a high-pressure compressor (C_{H}) mounted at the first end side (18L) and the second end side (18H), respectively;
a plurality of cylinder units (16A-16I) mounted at the top side (21) and reaching into the engine block (10, 110); and
a charge air system comprising
a compressor connection (34) being integrated in the one-piece cast engine block (10, 110) for connecting the low-pressure compressor (C_{L}) and the high-pressure compressor (C_{H}) of the two-stage turbocharged system (12, 112), and
an inlet manifold (22, 122) for distributing charge air to each of the plurality of cylinder units (16A-16I), wherein the inlet manifold (22, 122) comprises a plurality of fluidly connected charge air guide elements (23A-23I) according to any one of claims 1-4 and each charge air guide element (23A-23I) includes a mounting section (41) having a respective cylinder liner passed therethrough and being mounted onto the engine block (10) and a charge air guide section (40).

6. The internal combustion engine (1, 100) of claim 5, wherein the plurality of charge air guide elements (23A-23I) is configured to provide a fluid connection from an exit of the high-pressure compressor (C_{H}) to each of the cylinder units (16A-16I).

7. The internal combustion engine (1, 100) of claim 5 or 6, wherein the mounting section (41) of each of the plurality of charge air guide elements (23A-23I) is mounted at the top side (21) of the engine block (10, 110) and each of the plurality of cylinder units (16A-16I) comprises a cylinder head part (17) mounted to the respective mounting section (41).

8. The internal combustion engine (1, 100) of claim 7, wherein the second outlet opening (44C) of each of the plurality of charge air guide elements (23A-23I) is connected to a charge air inlet (17A) of the respective cylinder head part (17).

9. The internal combustion engine (1, 100) of any one of claims 5-8, wherein neighboring charge air guide elements of the plurality of charge air guide elements (23A-23I) are fluidly connected via a conduct, e.g., via a bellow (46, 246).

10. The internal combustion engine (1, 100) of any one of claims 5-9, wherein the low-pressure compressor (C_{L}) is configured for precompressing charge air during operation of the turbocharged internal combustion engine (1) and the low-pressure stage turbocharger (26) comprises further a low-pressure turbine (T_{L}), and,
the high-pressure compressor (C_{H}) is configured for compressing the pre-compressed charge air during operation of the internal combustion engine (1) and the high-pressure stage turbocharger (28) further comprises a high-pressure turbine (T_{H}); and
the two-stage turbocharged system (12, 112) further comprises a turbine pipe connection (35) fluidly connecting the low-pressure turbine (T_{L}) and the high-pressure turbine (T_{H}).

11. The internal combustion engine (1, 100) of claim 10, wherein the turbine pipe connection (35) and/or the compressor connection (34) extend substantially from the first end side (18L) to the second end side (18H) of the one-piece cast engine block (10, 110).

12. The internal combustion engine (1, 100) of any one of claims 5-11, further comprising an exhaust gas system, which comprises
an exhaust manifold (24) fluidly connecting exhaust outlets of the plurality of cylinder units (16A-16F) with an inlet of the high-pressure turbine (TH), and
the turbine pipe connection (35).

13. The internal combustion engine (1, 100) of claim 12, wherein the charge air system further comprises a mixing pipe (29) for mixing the charge air with exhaust gas, and the internal combustion engine (1) further comprises a fluid connection (36) connecting the exhaust gas system with the mixing pipe (29), and, for example, a control valve arranged within the valve connection (36) configured to control the amount of exhaust gas mixed with the charge air.

14. The internal combustion engine (1, 100) of claim 13, wherein the mixing pipe (29) fluidly connects the outlet of the high-pressure compressor (C_{H}) with an inlet opening of a first high-pressure charge air guide element of the plurality of high-pressure charge air guide elements (23A-23I).

15. A method for replacing a charge air guide element (23A-23I) of any one of claims 1-4 in an internal combustion engine according to any one of claims 5-14, the method comprising:
disconnecting the charge air guide element (23A-23I) of the plurality of charge air guide elements (23A-23I) that form an inlet manifold (22, 122); and
replacing the charge air guide element (23A-23I) by a new charge air guide element (23A-23I).

## Patentansprüche

1. Ladeluftführungselement (23) für eine Zylindereinheit (16A-16I) eines Verbrennungsmotors (1, 100), **dadurch gekennzeichnet, dass** das Ladeluftführungselement (23) enthält:
einen Befestigungsabschnitt (41) mit einem Durchgangsloch (42), das als ein Durchgang für einen Zylindermantel der Zylindereinheit (16A-16I) des Verbrennungsmotors (1, 100) in einem Befestigungszustand des Ladeluftführungselements ausgebildet ist, wobei der Befestigungsabschnitt (41) zum Befestigen an einem Motorblock (10) des Verbrennungsmotors (1, 100) ausgebildet und die Basis zum Befestigen eines Zylinderkopfs (17) ist, und
einen Ladeluftführungsabschnitt (40), der
einen ersten Durchgang (48A), der sich von einer Einlassöffnung (44A) auf einer ersten Seite des Ladeluftführungsabschnitts (40) zu einer ersten Auslassöffnung (44B) auf einer zweiten Seite des Ladeluftführungsabschnitts (40) erstreckt, und
einen zweiten Durchgang (48B), der eine zweite Auslassöffnung (44C) mit dem ersten Durchgang fluidverbindet, und wobei die zweite Auslassöffnung (44C) dazu ausgebildet ist, eine Fluidverbindung von der Einlassöffnung (44A) zu einem Ladelufteinlass der Zylindereinheit (16A-16I) im montierten Zustand auszubilden, definiert,
wobei der Ladeluftführungsabschnitt (40) dazu ausgebildet ist, mit einem Ladeluftführungsabschnitt eines Ladeluftführungselements, welches mit einer benachbarten Zylindereinheit in Bezug steht, verbindbar zu sein.

2. Ladeluftführungselement (23) nach Anspruch 1, wobei das Ladeluftführungselement (23) als ein integrales Gussteil ausgebildet ist.

3. Ladeluftführungselement (23) nach Anspruch 1 oder 2, wobei eine Richtung des ersten Durchgangs (48A) von der ersten Seite zu der zweiten Seite im Wesentlichen senkrecht zu der Richtung des Durchgangslochs (42) des Befestigungsabschnitts (41) orientiert ist.

4. Ladeluftführungselement (23) nach einem der Ansprüche 1 bis 3, wobei der Befestigungsabschnitt (41) als ein Wasserring zum Führen eines Kühlmittels zum Kühlen der Zylindereinheit (16A-16I) im Befestigungszustand ausgebildet ist.

5. Verbrennungsmotor (1, 100) mit
einem einstückigen Gussmotorblock (10, 110) mit einer Oberseite (21), einer ersten Endseite (18L) und einer zweiten Endseite (18H), wobei die zweite Endseite (18H) der ersten Endseite (18H) entgegengesetzt angeordnet ist,
einem zweistufigen Turboladesystem (12, 112) mit einem Niederdruckturbolader (26) mit einem Niederdruckkompressor (C_{L}) und einem Hochdruckturbolader (28) mit einem Hochdruckkompressor (C_{H}), die jeweils an der ersten Endseite (18L) und der zweiten Endseite (18H) befestigt sind,
einer Mehrzahl von Zylindereinheiten (16A-16I), die an der Oberseite (21) befestigt sind und in den Motorblock (10, 110) ragen, und
einem Ladeluftsystem mit
einer Kompressorverbindung (34), die in den einstückigen Gussmotorblock (10, 110) zum Verbinden des Niederdruckkompressors (C_{L}) und des Hochdruckkompressors (C_{H}) des zweistufigen Turboladesystems (12, 112) integriert ist, und
einem Einlasskrümmer (22, 122) zum Verteilen von Ladeluft zu einer jeden der Mehrzahl der Zylindereinheiten (16A-16I), wobei der Einlasskrümmer (22, 122) eine Mehrzahl von fluidverbundenen Ladeluftführungselementen (23A-23I) gemäß einem der Ansprüche 1 bis 4 aufweist und jedes Ladeluftführungselement (23A-23I) einen Befestigungsabschnitt (41) mit einem zugehörigen hindurchragenden Zylindermantel und befestigt am Motorblock (10) sowie einen Ladeluftführungsabschnitt (40) aufweist.

6. Verbrennungsmotor (1, 100) nach Anspruch 5, wobei die Mehrzahl von Ladeluftführungselementen (23A-23I) dazu ausgebildet ist, eine Fluidverbindung von einem Ausgang des Hochdruckkompressors (C_{H}) zu jeder der Zylindereinheiten (16A-16I) bereitzustellen.

7. Verbrennungsmotor (1, 100) nach Anspruch 5 oder 6, wobei der Befestigungsabschnitt (41) eines jeden der Mehrzahl von Ladeluftführungselementen (23A-23I) an der Oberseite (21) des Motorblocks (10, 110) befestigt ist und jede der Mehrzahl von Zylindereinheiten (16A-16I) ein Zylinderkopfteil (17) aufweist, der an dem entsprechenden Befestigungsabschnitt (41) befestigt ist.

8. Verbrennungsmotor (1, 100) nach Anspruch 7, wobei die zweite Auslassöffnung (44C) eines jeden der Mehrzahl von Ladeluftführungselementen (23A-23I) mit einem Ladelufteinlass (17A) des zugehörigen Zylinderkopfteils (17) verbunden ist.

9. Verbrennungsmotor (1, 100) nach einem der Ansprüche 5 bis 8, wobei benachbarte Ladeluftführungselemente der Mehrzahl von Ladeluftführungselementen (23A-23I) über eine Leitung, z.B. über einen Balg (46, 246), fluidverbunden sind.

10. Verbrennungsmotor (1, 100) nach einem der Ansprüche 5 bis 9, wobei der Niederdruckkompressor (C_{L}) dazu ausgebildet ist, Ladeluft während des Betriebs des turbogeladenen Verbrennungsmotors (1) vorzuverdichten und der Niederdruckstufenturbolader (26) ferner eine Niederdruckturbine (T_{L}) aufweist, und
der Hochdruckkompressor (C_{H}) dazu ausgebildet ist, während des Betriebs des Verbrennungsmotors (1) die vorverdichtete Ladeluft zu verdichten, und der Hochdruckstufenturbolader (28) ferner eine Hochdruckturbine (T_{H}) aufweist, und
das zweistufige Turboladesystem (12, 112) ferner eine Turbinenrohrverbindung (35) aufweist, die die Niederdruckturbine (T_{L}) und die Hochdruckturbine (T_{H}) fluidverbindet.

11. Verbrennungsmotor (1, 100) nach Anspruch 10, wobei die Turbinenrohrverbindung (35) und/oder die Kompressorverbindung (34) sich im Wesentlichen von der ersten Endseite (18L) zu der zweiten Endseite (18H) des einstückigen Gussmotorblocks (10, 110) erstrecken.

12. Verbrennungsmotor (1, 100) nach einem der Ansprüche 5 bis 11, ferner mit einem Abgassystem, welches
einen Abgaskrümmer (24) aufweist, der Abgasauslässe der Mehrzahl von Zylindereinheiten (16A-16F) mit einem Einlass der Hochdruckturbine (TH) fluidverbindet, und
die Turbinenrohrverbindung (35).

13. Verbrennungsmotor (1, 100) nach Anspruch 12, wobei das Ladeluftsystem ferner ein Mischrohr (29) zum Mischen der Ladeluft mit Abgas aufweist, und der Verbrennungsmotor (1) ferner aufweist eine Fluidverbindung (36), die das Abgassystem mit dem Mischrohr (29) verbindet, und z.B. ein Steuerventil, welches in der Ventilverbindung (36) angeordnet ist und zum Steuern der Menge von Abgas, welches mit der Ladeluft vermischt wird, ausgebildet ist.

14. Verbrennungsmotor (1, 100) nach Anspruch 13, wobei das Mischrohr (29) den Auslass des Hochdruckkompressors (C_{H}) mit einer Einlassöffnung eines ersten Hochdruckladeluftführungselements der Mehrzahl von Hochdruckladeluftführungselementen (23A-23I) fluidverbindet.

15. Verfahren zum Austauschen eines Ladeluftführungselements (23A-23I) nach einem der Ansprüche 1 bis 4 in einem Verbrennungsmotor nach einem der Ansprüche 5 bis 14, mit
Lösen des Ladeluftführungselements (23A-23I) der Mehrzahl von Ladeluftführungselemente (23A-23I), die einen Einlasskrümmer (22, 122) ausbilden, und
Austauschen des Ladeluftführungselements (23A-23I) mit einem neuen Ladeluftführungselement (23A-23I).

## Revendications

1. Élément de guidage d'air de suralimentation (23) pour une unité de cylindre (16A-16I) d'un moteur à combustion interne (1, 100), **caractérisé en ce que** l'élément de guidage d'air de suralimentation (23) comprend:
une section de montage (41) comportant un trou traversant (42) configuré comme un passage pour une chemise de cylindre de l'unité de cylindre (16A-16I) du moteur à combustion interne (1, 100) dans un état monté de l'élément de guidage d'air de suralimentation, la section de montage (41) étant configurée de manière à pouvoir être montée sur un bloc moteur (10) du moteur à combustion interne (1, 100) et constituant la base pour le montage d'une culasse (17); et
une section de guidage d'air de suralimentation (40), définissant:
un premier passage (48A) qui s'étend à partir d'une ouverture d'entrée (44A) sur un premier côté de la section de guidage d'air de suralimentation (40) jusqu'à une première ouverture de sortie (44B) sur un deuxième côté de la section de guidage d'air de suralimentation (40), et
un deuxième passage (48B) qui relie de façon fluidique une deuxième ouverture de sortie (44C) au premier passage, et la deuxième ouverture de sortie (44C) est configurée de manière à établir une connexion fluidique entre l'ouverture d'entrée (44A) et une entrée d'air de suralimentation de l'unité de cylindre (16A-16I) à l'état monté,
la section de guidage d'air de suralimentation (40) étant configurée de manière à pouvoir être connectée à une section de guidage d'air de suralimentation d'un élément de guidage d'air de suralimentation qui est associé à une unité de cylindre voisine.

2. Élément de guidage d'air de suralimentation (23) selon la revendication 1, dans lequel l'élément de guidage d'air de suralimentation (23) est une pièce coulée intégrale.

3. Élément de guidage d'air de suralimentation (23) selon la revendication 1 ou 2, dans lequel une direction du premier passage (48A) du premier côté au deuxième côté est essentiellement orientée de façon orthogonale à la direction du trou traversant (42) de la section de montage (41).

4. Élément de guidage d'air de suralimentation (23) selon l'une quelconque des revendications 1 à 3, dans lequel la section de montage (41) est configurée comme un anneau d'eau pour guider un agent de refroidissement destiné à refroidir l'unité de cylindre (16A-16I) à l'état monté.

5. Moteur à combustion interne (1, 100), comprenant:
un bloc moteur coulé d'une seule pièce (10, 110) présentant un côté supérieur (21), un premier côté d'extrémité (18L) et un deuxième côté d'extrémité (18H), le deuxième côté d'extrémité (18H) étant opposé au premier côté d'extrémité (18L);
un système turbocompressé à deux étages (12, 112) comprenant un turbocompresseur à basse pression (26) présentant un compresseur à basse pression (C_{L}), et un turbocompresseur à haute pression (28) présentant un compresseur à haute pression (C_{H}) montés sur le premier côté d'extrémité (18L) et le deuxième côté d'extrémité (18H), respectivement;
une pluralité d'unités de cylindre (16A-16I) qui sont montées au côté supérieur (21) et qui pénètrent dans le bloc moteur (10, 110); et
un système d'air de suralimentation, comprenant:
une connexion de compresseur (34) qui est intégrée dans le bloc moteur coulé d'une seule pièce (10, 110) servant à relier le compresseur à basse pression (C_{L}) au compresseur à haute pression (C_{H}) du système turbocompressé à deux étages (12, 112), et
un collecteur d'entrée (22, 122) qui distribue de l'air de suralimentation à chacune de la pluralité d'unités de cylindre (16A-16I), dans lequel le collecteur d'entrée (22, 122) comprend une pluralité d'éléments de guidage d'air de suralimentation connectés de façon fluidique (23A-23I) selon l'une quelconque des revendications 1 à 4, et chaque élément de guidage d'air de suralimentation (23A-23I) comprend une section de montage (41) présentant une chemise de cylindre respective passant à travers celle-ci et montée sur le bloc moteur (10), et une section de guidage d'air de suralimentation (40).

6. Moteur à combustion interne (1, 100) selon la revendication 5, dans lequel la pluralité d'éléments de guidage d'air de suralimentation (23A-23I) sont configurés de manière à établir une connexion fluidique entre une sortie du compresseur à haute pression (C_{H}) et chacune des unités de cylindre (16A-16I).

7. Moteur à combustion interne (1, 100) selon la revendication 5 ou 6, dans lequel la section de montage (41) de chacun de la pluralité d'éléments de guidage d'air de suralimentation (23A-23I) est montée au côté supérieur (21) du bloc moteur (10, 110), et chacune de la pluralité d'unités de cylindre (16A-16I) comprend une partie de culasse (17) qui est montée sur la section de montage respective (41).

8. Moteur à combustion interne (1, 100) selon la revendication 7, dans lequel la deuxième ouverture de sortie (44C) de chacun de la pluralité d'éléments de guidage d'air de suralimentation (23A-23I) est connectée à une entrée d'air de suralimentation (17A) de la partie de culasse respective (17).

9. Moteur à combustion interne (1, 100) selon l'une quelconque des revendications 5 à 8, dans lequel des éléments de guidage d'air de suralimentation voisins de la pluralité d'éléments de guidage d'air de suralimentation (23A-23I) sont connectés de façon fluidique par l'intermédiaire d'un conduit, par exemple par l'intermédiaire d'un soufflet (46, 246).

10. Moteur à combustion interne (1, 100) selon l'une quelconque des revendications 5 à 9, dans lequel le compresseur à basse pression (C_{L}) est configuré de manière à pré-comprimer de l'air de suralimentation pendant le fonctionnement du moteur à combustion interne turbocompressé (1), et le turbocompresseur d'étage à basse pression (26) comprend en outre une turbine à basse pression (T_{L}), et
le compresseur à haute pression (C_{H}) est configuré de manière à comprimer l'air de suralimentation pré-comprimé pendant le fonctionnement du moteur à combustion interne (1), et le turbocompresseur d'étage à haute pression (28) comprend en outre une turbine à haute pression (T_{H}); et
le système turbocompressé à deux étages (12, 112) comprend en outre une connexion de tuyau de turbine (35) qui relie de façon fluidique la turbine à basse pression (T_{L}) et la turbine à haute pression (T_{H}).

11. Moteur à combustion interne (1, 100) selon la revendication 10, dans lequel la connexion de tuyau de turbine (35) et/ou la connexion de compresseur (34) s'étend sensiblement à partir du premier côté d'extrémité (18L) jusqu'au deuxième côté d'extrémité (18H) du bloc moteur coulé d'une seule pièce (10, 110).

12. Moteur à combustion interne (1, 100) selon l'une quelconque des revendications 5 à 11, comprenant en outre un système de gaz d'échappement, qui comprend:
un collecteur d'échappement (24) qui relie de façon fluidique des sorties d'échappement de la pluralité d'unités de cylindre (16A-16F) à une entrée de la turbine à haute pression (T_{H}), et
la connexion de tuyau de turbine (35).

13. Moteur à combustion interne (1, 100) selon la revendication 12, dans lequel le système d'air de suralimentation comprend en outre un tuyau de mélange (29) pour mélanger l'air de suralimentation avec du gaz d'échappement, et le moteur à combustion interne (1) comprend en outre une connexion fluidique (36) qui relie le système de gaz d'échappement au tuyau de mélange (29) et, par exemple, une soupape de commande qui est agencée à l'intérieur de la connexion de soupape (36) et qui est configurée de manière à commander la quantité de gaz d'échappement qui est mélangée avec l'air de suralimentation.

14. Moteur à combustion interne (1, 100) selon la revendication 13, dans lequel le tuyau de mélange (29) relie de façon fluidique la sortie du compresseur à haute pression (C_{H}) à une ouverture d'entrée d'un premier élément de guidage d'air de suralimentation à haute pression de la pluralité d'éléments de guidage d'air de suralimentation (23A-23I).

15. Procédé pour remplacer un élément de guidage d'air de suralimentation (23A-23I) selon l'une quelconque des revendications 1 à 4 dans un moteur à combustion interne selon l'une quelconque des revendications 5 à 14, comprenant les étapes suivantes:
déconnecter l'élément de guidage d'air de suralimentation (23A-23I) de la pluralité d'éléments de guidage d'air de suralimentation (23A-23I) qui forment un collecteur d'entrée (22, 122); et
remplacer l'élément de guidage d'air de suralimentation (23A-23I) par un nouvel élément de guidage d'air de suralimentation (23A-23I).
